# EUROPÄISCHE PATENTANMELDUNG

(11) **EP 1 245 329 A1**
(43) Veröffentlichungstag der Anmeldung: **02.10.2002**
(21) Anmeldenummer: 02007004.1
(22) Anmeldetag: 27.03.2002
(51) Int. Cl.: B23Q 1/00, B23Q 11/10, F16J 15/44, F16C 37/00, F16L 27/087

(54) **Einrichtung für die Zuführung von Kühl- und Schmiermittel zu einem rotierenden Werkzeug mit innerer Kühl- und Schmiermittelzufuhr**

(30) Priorität: 28.03.2001 DE 10115520
(71) Anmelder: Mader, Hartmut, 59227 Ahlen (DE); Mittelfarwick, Felix, 59227 Ahlen (DE)
(72) Erfinder: Mader, Hartmut, 59227 Ahlen (DE); Mittelfarwick, Felix, 59227 Ahlen (DE)
(74) Vertreter: Schulze Horn & Partner

(57) **Zusammenfassung**

Die Erfindung betrifft eine Einrichtung (1) für die Zuführung von Kühl- und Schmiermittel zu einem rotierenden Werkzeug mit innerer Kühl- und Schmiermittelzufuhr, wobei die Einrichtung (1) durch einen nichtrotierenden Ringkörper (10) gebildet ist, der einen spindelnahen Abschnitt des Werkzeugs oder eine Spannmutter (2) oder einen Abschnitt der Werkzeugaufnahmespindel (3) konzentrisch umgibt und einen Zufuhrkanal (14) und einen inneren Ringkanal (13') für das Kühl- und Schmiermittel aufweist, der in das Innere des Werkzeugs führt.

Die neue Einrichtung ist dadurch gekennzeichnet,
- daß der Ringkörper (10) beiderseits des Ringkanals (13') mit dem Werkzeug oder der Spannmutter (2) oder der Werkzeugaufnahmespindel (3) mindestens je ein Gleitlager (15, 16) mit je einer dichtring- und dichtstofflosen, förderrillenfreien Spaltdichtung bildet,
- daß das Kühl- und Schmiermittel im Ringkörper (10) unter einem Druck von mindestens 80 bar steht und
- daß das Verhältnis zwischen Dichtspaltmaß und Dichtspaltlänge des Gleitlagers (15, 16) so ist, daß bei gegebenem Druck durch den Strömungswiderstand des Dichtspalts eine ausreichende Abdichtung und durch eine begrenzte Leckage des Dichtspalts eine ausreichende Schmierung der relativ zueinander rotierenden Teile des Gleitlagers (15, 16) gewährleistet ist.

## Beschreibung

Die vorliegende Erfindung betrifft eine Einrichtung für die Zuführung von Kühl- und Schmiermittel zu einem rotierenden Werkzeug mit innerer Kühl- und Schmiermittelzufuhr, wobei das Werkzeug bei seinem Einsatz mittels eines Spannmittels an einer Werkzeugaufnahmespindel gehaltert ist, die drehantreibbar in einem nichtrotierenden Werkzeugkopf, der Teil einer Werkzeugmaschine ist, gelagert ist, wobei die Einrichtung durch einen nichtrotierenden Ringkörper gebildet ist, der einen spindelnahen Abschnitt des Werkzeugs oder eine Spannmutter oder einen Abschnitt der Werkzeugaufnahmespindel konzentrisch Umgibt, wobei der Ringkörper mindestens einen von außen zu einem Ringkanal an seinem Innenumfang führenden Zufuhrkanal für das Kühl- und Schmiermittel aufweist und wobei vom Ringkanal eine Strömungsverbindung in das Innere des Werkzeugs führt.

Eine Einrichtung der eingangs genannten Art ist aus der DE 31 29 403 A1 bekannt. Diese Schrift zeigt eine Einrichtung für die Kühlmittelzufuhr zu mit Kühlmittelkanälen versehenen, rotierenden Schneidwerkzeugen für die spanende Metallverarbeitung, insbesondere Bohrwerkzeuge. Die Einrichtung weist einen auf einem zylindrischen Werkzeugschaft angeordneten Kühlmittelring auf, der außen mit einer stationären Zuleitung verbindbar ist. Innen steht der Kühlmittelring über einen Ringkanal mit den Kühlmittelbohrungen in Verbindung. Der Kühlmittelring weist je ein an den Ringkanal angrenzendes Wandteil mit je einer auf den zylindrischen Werkzeugschaft passenden Bohrung auf. Der Werkzeugschaft weist im Bereich der beiden Bohrungen je eine gewindeartige Förderrille auf, deren Tiefe im Bereich des Ringkanals am größten ist und zu den beiden äußeren Enden der Bohrungen des aus Metall bestehenden Kühlmittelringes hin bis auf Null abnimmt. Die beiden Förderrillen sind zueinander gegenläufig derart angeordnet, daß bei einem rechtsdrehenden Werkzeugschaft die den Schneidwerkzeugen zugekehrte, vordere Förderrille eine rechtsgängige Steigung und die hintere Förderrille eine linksgängige Steigung aufweist und umgekehrt. Als nachteilig ist bei dieser bekannten Einrichtung anzusehen, daß der Werkzeugschaft eine aufwendige Bearbeitung erfordert, um darin die teils eine rechtsgängige und teils eine linksgängige Steigung aufweisenden Förderrillen zu erzeugen. Weiterhin ist ein Nachteil dieser bekannten Einrichtung, daß die gewünschte Dichtfunktion nur bei einer von zwei möglichen Drehrichtungen des Werkzeuges erreicht wird; bei umgekehrter Drehrichtung ergibt sich im Gegenteil sogar eine verstärkte Förderwirkung der Förderrillen in Richtung eines Durchsatzes von Kühl- und Schmiermittel durch den Spalt zwischen Ringkörper und Werkzeugschaft nach außen. Damit verkehrt sich dann die Funktion der Förderrillen in ihr Gegenteil. Bei Werkzeugen, die mit unterschiedlichen Drehrichtungen arbeiten können, ist diese Einrichtung also nicht einsetzbar. Außerdem müssen unterschiedliche Einrichtungen für linksdrehende und für rechtsdrehende Werkzeuge hergestellt und eingebaut werden. Schließlich wird noch als nachteilig angesehen, daß die volle Dichtwirkung dieser Einrichtung erst dann erreicht wird, wenn das Werkzeug sich in Rotation befindet, da nur bei rotierendem Werkzeug die Förderrillen ihre Funktion erfüllen. Aus diesem Grunde ist es erforderlich, bis zum Anlaufen des Werkzeuges die Kühl- und Schmiermittelzufuhr zu unterbrechen, damit nicht zu große Leckageströme auftreten. Erst wenn das Werkzeug seine Drehung ausführt, wird die Dichtfunktion erreicht und es kann dann das Kühl- und Schmiermittel zugeführt werden.

Aus der DE 198 32 176 A1 ist weiterhin eine Dichtung für rotierende Spindeln oder Wellen bei Zubehörteilen von Werkzeugmaschinen, insbesondere bei angetriebenen Werkzeugen, bekannt. Diese Dichtung weist einen Dichtspalt auf, welcher mit einem viskosen Dichtstoff gefüllt ist. Dieser Dichtstoff ist hinsichtlich seiner chemischphysikalischen Eigenschaften derart ausgebildet, daß er bei der Rotation überwiegend an den Wänden des Dichtspaltes haften bleibt, so daß innerhalb des Dichtstoffes eine Art Scherwirkung erfolgt. Ein bevorzugter Anwendungsfall für diese Dichtung ist die Verhinderung eines Zutritts von Kühl- und Schmierflüssigkeit für das Werkzeug in den Bereich der Spindellager. In dieser Anwendung hat die beschriebene Dichtung keinerlei Lagerfunktion; die Funktion beschränkt sich darauf, einen Durchtritt von druckloser Kühl- und Schmierflüssigkeit durch den Dichtspalt auszuschließen. Eine Übertragung einer derartigen Dichtung auf ein Gleitlager zwischen einem Ringkörper für eine Kühlund Schmiermittelzufuhr und einem Werkzeugschaft oder einer Spindel ist nicht möglich, da die beschriebene Dichtung mit dem darin befindlichen viskosen Dichtstoff nur funktionsfähig ist, wenn auf beiden Seiten des Dichtspalts der gleiche Druck herrscht. Wenn auf den beiden Seiten des Dichtspalts unterschiedliche Drücke herrschen, kommt es zu einem Herausdrücken oder Ausspülen des Dichtstoffs aus dem Dichtspalt, wodurch dieser seine Dichtigkeit sehr schnell verliert.

Eine weitere Einrichtung für den eingangs genannten Zweck ist aus der DE 43 24 952 C2 bekannt. Diese Schrift offenbart einen Werkzeugkopf zur Aufnahme von Werkzeugen und/oder Werkzeughaltern, mit einer Werkzeugspindel, mindestens zwei die in Rotation versetzbare Werkzeugspindel unterstützenden Lagern und mit einer der Kühlung und/oder Schmierung des Werkzeuges dienenden Kühlmittelzufuhr, die wenigstens einen die Werkzeugspindel durchdringenden, der Kühlmittelzufuhr dienenden Kühlmittelkanal aufweist. Die an einer Umfangsfläche der Werkzeugspindel liegende Mündung des Kühlmittelkanals ist mittels einer ersten Dichtungseinrichtung gegenüber den Lagern abgedichtet. Weiterhin ist eine zweite Dichtungseinrichtung vorgesehen, die mindestens zwei in einem Abstand zueinander angeordnete Dichtringe aufweist, zwischen denen die erste Dichtungseinrichtung angeordnet ist. Schließlich ist zwischen der ersten Dichtungseinrichtung und der zweiten Dichtungseinrichtung jeweils ein Entlastungskanal vorgesehen, der mit einer eine Leckage anzeigenden Anzeigeeinrichtung zusammenwirkt. Bei dieser bekannten Einrichtung soll also erreicht werden, daß im Betrieb im Normalfall durch die Dichtungseinrichtungen jede Leckage vermieden wird, da hier eine solche Leckage zum Eindringen von Kühl- und Schmierflüssigkeit in die Lager zwischen Werkzeugkopf und Werkzeugaufnahmespindel und damit zu deren Beschädigung oder gar Zerstörung führen würde. Zwar soll hier über eine Anzeigeeinrichtung eine Leckage angezeigt werden, jedoch ist bei Anzeige einer solchen Leckage meistens bereits eine Schädigung oder Zerstörung der Lager eingetreten. Außerdem ist es schwierig, an der Anzeigeeinrichtung das Auftreten einer Leckage sicher zu erkennen, weil im Betrieb der Einrichtung meist der gesamte Bereich des Werkzeugkopfes durch Kühl- und Schmierflüssigkeit benetzt wird und weil üblicherweise das Werkzeug hinter einer das Bedienungspersonal abschirmenden Schutzabdeckung arbeitet, so daß ein Austritt von weiterer Kühl- und Schmierflüssigkeit im Bereich der Leckageanzeigeeinrichtung nur schwer oder gar nicht erkennbar ist. Nachteilig ist bei dieser Vorrichtung also einerseits der hohe konstruktive Aufwand mit mehreren zusätzlichen Dichteinrichtungen, die zudem im Betrieb der Einrichtung Verschleißteile darstellen, und zu anderen die Gefahr, daß es leicht zu Schäden oder Zerstörungen der Lager zwischen Werkzeugkopf und Werkzeugaufnahmespindel kommen kann.

Für die vorliegende Erfindung stellt sich deshalb die Aufgabe, eine Einrichtung der eingangs genannten Art zu schaffen, die die dargelegten Nachteile vermeidet und mit der insbesondere eine vereinfachte Konstruktion mit geringerem Herstellungs- und Wartungsaufwand, mit einer langen störungsfreien Einsatzdauer und mit einer guten, die Werkzeugstandzeit verlängernden Kühl- und Schmierwirkung erreicht wird, wobei Beschädigungsgefahren für die Lager zwischen Werkzeugkopf und Werkzeugaufnahmespindel vermieden werden sollen.

Die Lösung dieser Aufgabe gelingt erfindungsgemäß mit einer Einrichtung der eingangs genannten Art, die dadurch gekennzeichnet ist,
- daß der Ringkörper in Axialrichtung gesehen beiderseits seines Ringkanals mit dem Werkzeug oder der Spannmutter oder der Werkzeugaufnahmespindel mindestens je ein Gleitlager mit je einer dichtring- und dichtstofflosen, förderrillenfreien Spaltdichtung bildet,
- daß das Kühl- und Schmiermittel bei seiner Einleitung in den Ringkörper unter einem Druck von mindestens 80 bar steht und
- daß das Verhältnis zwischen einem Dichtspaltmaß des Gleitlagers und einer Dichtspaltlänge des Gleitlagers so gewählt ist, daß bei dem vorgegebenen Druck des Kühl- und Schmiermittels zum einen durch den Strömungswiderstand des Dichtspalts eine ausreichende Abdichtung und gleichzeitig zum anderen durch eine begrenzte Lekkage des Dichtspalts eine ausreichende Schmierung der relativ zueinander rotierenden Teile des Gleitlagers gewährleistet ist.

Die erfindungsgemäße Einrichtung ist konstruktiv überraschend einfach, weil sie im wesentlichen nur aus einem Ringkörper besteht, wobei zusätzliche Dichtungseinrichtungen oder Mittel, wie elastische Dichtringe oder Simmeringe oder, wie aus dem Stand der Technik bekannt, Dichtmassen oder Förderrillen, nicht erforderlich sind. Die für die Funktion der Einrichtung ausreichende Abdichtung wird allein durch die Dichtwirkung der Spaltdichtungen erreicht, wobei die Dichtwirkung um so größer ist, je enger und/oder je länger der Dichtspalt ist. Gleichzeitig ist aber erfindungswesentlich eine bestimmte begrenzte Leckage durch den Dichtspalt vorgesehen, um die relativ zueinander rotierenden Teile der Gleitlager ausreichend zu schmieren, wobei die Leckage aber zweckmäßig nicht größer als nötig bemessen wird. Das Auftreten dieser Lekkage ist für die Kühlung und Schmierung des Werkzeugs bei der vorliegenden Anwendung absolut problemlos, weil nur ein sehr kleiner Anteil des Kühl- und Schmiermittels als Leckageanteil für die Schmierung der Gleitlager der Einrichtung anfällt. Dieser kleine Anteil vermindert die Menge des zum Werkzeug selbst geführten Kühl- und Schmiermittels, das üblicherweise die Form einer Flüssigkeit hat, nicht merklich. Außerdem läuft der Leckageanteil des Kühl- und Schmiermittels bei einer Werkzeugmaschine nach seinem Abtropfen vom Ringkörper oder Werkzeugkopf ohnehin zurück in den Kreislauf des Kühl- und Schmiermittels, so daß im Endeffekt auch keine bleibenden Kühl- und Schmiermittelverluste eintreten. Die Gleitlager müssen hinsichtlich ihrer Passung und Formgebung, also hinsichtlich Spaltmaß und Spaltlänge, selbstverständlich so exakt ausgeführt und aufeinander abgestimmt sein, daß die gewünschte Dichtwirkung in Verbindung mit der gewünschten Leckage bei einem vorgegebenen Kühl- und Schmiermitteldruck erreicht wird. Je höher dieser Druck ist, desto enger und/oder desto länger muß der Dichtspalt sein und je niedriger dieser Druck ist, desto weiter und/oder kürzer muß der Dichtspalt sein, damit die gewünschte ausgewogene Abstimmung zwischen Dichtigkeit und Leckage der Gleitlager für den jeweils anstehenden Druck erzielt wird. Vorteilhaft ist bei der erfindungsgemäßen Einrichtung außerdem, daß die Dichtwirkung in den Gleitlagern, im Gegensatz zu Dichtungen mit Förderrillen, unabhängig von der Drehrichtung ist, sodaß sich hier keinerlei Probleme ergeben, wenn Werkzeuge mit Drehrichtung rechts und Werkzeuge mit Drehrichtung links eingesetzt werden. Wenn verschiedene Werkzeuge eingesetzt werden sollen, die mit unterschiedlichen Drücken des Kühl- und Schmiermittels beaufschlagt werden müssen, können verschiedene Einrichtungen druckabhängig eingesetzt werden, da das Ein- und Ausbauen der Einrichtung gemäß Erfindung schnell und einfach geht. Dieser Aus- und Einbau kann entfallen, wenn die Einrichtung Teil des Werkzeugs selbst ist. Das unter Druck, hier mindestens 80 bar, zugeführte Kühl- und Schmiermittel bildet innerhalb der Gleitlager ein Schmierpolster, so daß eine sehr geringe Reibung und praktisch kein Verschleiß auftritt, was für eine hohe störungsfreie Laufzeit sorgt. Bei einer Anordnung der Einrichtung außerhalb des Werkzeugkopfes besteht keinerlei Gefahr für einen schädlichen Zutritt des Kühl- und Schmiermittels zu den Lagern zwischen Werkzeugkopf und Werkzeugaufnahmespindel, so daß ein in dieser Hinsicht störungssicherer Betrieb gewährleistet ist. Auch bei Anordnung der Einrichtung innerhalb des Werkzeugkopfes ist auf einfache Weise eine Sicherung der Spindellager gegen einen Zutritt von Kühl- und Schmierflüssigkeit möglich. Ein weiterer Vorteil der erfindungsgemäßen Einrichtung besteht schließlich noch darin, daß diese aufgrund ihrer einfachen und kompakten Bauweise zur Nachrüstung von vorhandenen Maschinen gut geeignet ist. Damit läßt sich die Funktionssicherheit und insbesondere die Produktivität von vorhandenen Maschinen mittels nachträglicher Anbringung der erfindungsgemäßen Einrichtung und mittels der damit realisierbaren Druckerhöhung des Kühl- und Schmiermittels verbessern, weil schnellere Schneidgeschwindigkeiten und/oder längere Standzeiten der Werkzeuge erreicht werden.

In weiterer Ausgestaltung ist bevorzugt vorgesehen, daß die Spaltdichtung als Labyrinthdichtung ausgebildet ist. Auf diese Weise kann auf einer geringen axialen Länge schon eine große Dichtspaltlänge erreicht werden, was eine kompakte Bauweise der Einrichtung fördert.

Weiterhin ist gemäß Erfindung vorgesehen, daß außenseitig an den Ringkörper mindestens eine Kühl- und Schmiermittel-Zuleitung in Strömungsverbindung mit dem Zufuhrkanal anschließbar ist. Durch diese Zuführung des Kühl- und Schmiermittels über eine äußere Zuleitung sind Eingriffe in den Werkzeugkopf und in die Werkzeugaufnahmespindel für die Zuführung des Kühl- und Schmiermittels in der Regel nicht erforderlich, was die Integration der Einrichtung in eine Maschine, insbesondere bei Nachrüstung, erleichtert.

Weiterhin ist vorgesehen, daß die Kühl- und Schmiermittel-Zuleitung als maschinenseitig festgelegte Rohrleitung ausgeführt ist, die eine Drehmomentstütze für den nicht rotierenden Ringkörper bei Rotation des Werkzeugs, der Spannmutter und der Werkzeugaufnahmespindel bildet. Damit erfüllt die Zuleitung zwei Funktionen gleichzeitig, was zu einem geringen Bauteileaufwand bei Herstellung, Montage und Betrieb der Einrichtung beiträgt.

Zur Erleichterung der Herstellung und der Montage der Einrichtung ist weiter vorgesehen, daß der Ringkörper in einer Radialebene in zwei Teilkörper geteilt ist, die miteinander dichtend und lösbar verbunden sind.

Weiter ist vorgesehen, daß die Kühl- und Schmiermittel-Zuleitung an denjenigen Teilkörper des Ringkörpers anschließbar ist, der von einem Arbeitsende des Werkzeugs weiter entfernt liegt. Hiermit wird eine Beeinträchtigung des Arbeitsbereiches des Werkzeuges durch die Einrichtung oder die Zuleitung vermieden oder zumindest auf ein Mindestmaß begrenzt. Außerdem besteht so die Möglichkeit, bedarfsweise den einen Teilkörper, der nicht mit der Zuleitung verbunden ist, separat abzubauen, was beispielsweise für einen Zugang zur Spannmutter erforderlich werden kann.

Für eine Ausführung der Einrichtung, bei der der Ringkörper die Spannmutter umgibt, ist vorgesehen, daß der Ringkörper mindestens einen Riegel aufweist, der bei stillstehender Spannmutter mit dieser in einen eine relative Verdrehung unterbindenden Eingriff bringbar ist. In dieser Ausführung kann die Einrichtung dazu genutzt werden, die Spannmutter gegen Verdrehung zu arretieren, um dann durch Verdrehen der Werkzeugaufnahmespindel bei z.B. einem Werkzeugwechsel oder Werkzeughalterwechsel die Spannmutter zu lösen und wieder anzuziehen, ohne daß dafür die Einrichtung oder Teile der Einrichtung abgebaut werden müßten.

Falls die Kühl- und Schmiermittel-Zuleitung nicht als Drehmomentstütze genutzt werden kann oder eine ausreichende Abstützung von Drehmomenten durch die Zuleitung nicht gewährleistet ist, wird vorgeschlagen, daß der Ringkörper an seiner Außenseite mindestens ein Eingriffselement zum bedarfsweisen Ansetzen einer Drehmomentstütze aufweist. Im einfachsten Fall besteht das Eingriffselement aus einer Bohrung, in die ein entsprechendes Gegenelement einsetzbar ist, das an seiner anderen Seite an einem feststehenden Maschinenteil abstützbar oder festlegbar ist.

Eine andere Ausführung der Einrichtung sieht vor, daß der Ringkörper als integraler Teil des Werkzeugkopfs ausgebildet und/oder in diesem untergebracht ist und dort die Werkzeugaufnahmespindel umgibt und daß der Werkzeugkopf mit einem drucklosen, gegen im Werkzeugkopf angeordnete Lager abgedichteten Ableitungskanal für die Leckageanteile des Kühl- und Schmiermittels ausgebildet ist. Auf diese Weise ist die Einrichtung sehr platzsparend untergebracht, wobei die äußeren Abmessungen des Werkzeugkopfs nicht verändert werden müssen, sofern in dessen Innerem ausreichend Platz zur Verfügung steht, was in den meisten Fällen in der Praxis gegeben ist. Die gewollt anfallenden Leckageanteile des Kühl- und Schmiermittels gelangen bei dieser Ausführung der Einrichtung durch einen drucklosen Ableitungskanal nach außen und können von dort wieder ohne weitere Maßnahmen dem Kühl- und Schmiermittelkreislauf zugeführt werden. Da der Ableitungskanal drucklos ist, besteht von dieser Seite keine Gefahr einer Schädigung der Lager zwischen Werkzeugaufnahmespindel und Werkzeugkopf. Die Zufuhr des Kühl- und Schmiermittels erfolgt zwar unter einem hohen Druck, jedoch ist durch konstruktive Maßnahmen einfach sicherzustellen, daß kein unter Druck stehendes Kühl- und Schmiermittel bis in den Bereich der Lager zwischen Werkzeugkopf und Werkzeugaufnahmespindel gelangen kann. Vorzugsweise geschieht das in der Weise, daß mit axialem Abstand vom Ringkörper Dichtringe angeordnet sind und daß die Zwischenräume zwischen dem Ringkörper und den Dichtringen durch Verbindung mit dem Ableitungskanal ebenfalls drucklos gehalten werden. Damit werden die Dichtungen hier nur sehr gering beansprucht, was zu der gewünschten Sicherheit gegen einen Eintritt von Kühl- und Schmierflüssigkeit in die Spindellager führt.

Schließlich ist gemäß der Erfindung noch bevorzugt vorgesehen, daß der Ringkörper und die weiteren vom Kühl- und Schmiermittel durchströmten Teile der Werkzeugmaschine für einen Kühl- und Schmiermittel-Druck von bis zu etwa 200 bar ausgelegt sind. Dieser hohe Druck, der bei entsprechender Auslegung der erfindungsgemäßen Einrichtung und der zugehörigen weiteren Komponenten, insbesondere Kühl- und Schmiermittelleitungen und -pumpe, in der Praxis sogar noch über 200 bar angehoben werden kann, sorgt für eine besonders intensive Kühlung und Schmierung des im Einsatz befindlichen Werkzeuges innerhalb eines Werkstücks. Außerdem wird durch die intensive Spülwirkung des Hochdruck-Kühl- und Schmiermittels für eine besonders wirksame Späneabfuhr aus dem Bereich zwischen Werkzeug und Werkstück gesorgt, so daß auch Tiefbohrungen oder Sacklochbohrungen oder lange Gewindebohrungen in einem Durchlauf und mit hoher Arbeitsgeschwindigkeit ohne zwischenzeitliches Zurückfahren des Werkzeuges ausgeführt werden können.

Im folgenden werden drei Ausführungsbeispiele der Erfindung anhand einer Zeichnung erläutert. Die Figuren der Zeichnung zeigen:
- Figur 1: eine Einrichtung in einer ersten Ausführung, zusammen mit einer Werkzeugaufnahmespindel und einem Werkzeugkopf, im Längsschnitt,
- Figur 2: die Einrichtung in einer zweiten Ausführung, in gleicher Darstellung wie die Figur 1, und
- Figur 3: die Einrichtung in einer dritten Ausführung, wieder in gleicher Darstellungsweise wie in Figur 1 und 2.

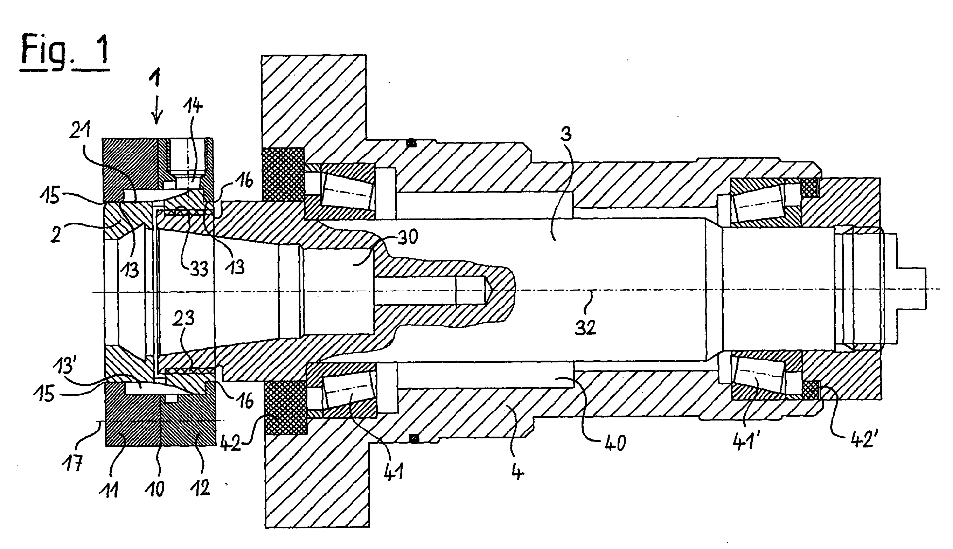

Figur 1 der Zeichnung zeigt ein erstes Ausführungsbeispiel einer Einrichtung 1 für die Zuführung von Kühl- und Schmiermittel zu einem rotierenden Werkzeug mit innerer Kühl- und Schmiermittelzufuhr. Die Einrichtung 1 besteht hier aus einem Ringkörper 10, der auf einer Spannmutter 2 angeordnet ist und diese an ihrem Außenumfang umgibt. Die Spannmutter 2 ist mit einer Werkzeugaufnahmespindel 3 verschraubt. Die Werkzeugaufnahmespindel 3 ist drehantreibbar in einem nicht rotierenden Werkzeugkopf 4 angeordnet und gelagert. Im hohlen Inneren 30 der Werkzeugaufnahmespindel 3 ist das Werkzeug in Verbindung mit der Spannmutter 2 einspannbar, wobei das Werkzeug hier aus Übersichtlichkeitsgründen nicht dargestellt ist. Die Werkzeugaufnahme im hohlen Inneren 30 der Spindel 3 entspricht gängigen Normen, ebenso wie die Formgebung am Innenumfang der Spannmutter 2 und die Formgebung des Einspann-Endes der in der Spindel 3 halterbaren Werkzeuge.

Der Ringkörper 10 besitzt an seinem Innenumfang 13 einen Ringkanal 13', der mit einem Zufuhrkanal 14, der in Radialrichtung von außen nach innen durch den Ringkörper 10 verläuft, verbunden ist. An das radial äußere Ende des Kanals 14 ist eine Kühl- und Schmiermittelzuleitung anschließbar. Alternativ kann der Ringkanal auch ganz oder zum Teil im Außenumfang der Spannmutter 2 liegen.

An seinem axial vorderen und hinteren Bereich bildet der Ringkörper 10 an seinem Innenumfang 13 mit dem Außenumfang 21 der Spannmutter 2 je ein Gleitlager 15, 16 mit einer Spaltdichtung. Dies bedeutet, daß keine separaten Dichtringe, Dichtstoffe oder dergleichen Mittel vorgesehen sind. Eine für den hier vorgesehenen Zweck ausreichende Dichtigkeit wird allein durch ein bestimmtes, geringes Maß des Spalts und dessen relativ große axiale Länge zwischen dem Innenumfang 13 des Ringkörpers 10 und dem Außenumfang 21 der Spannmutter 2 erreicht. Eine gewisse geringe Leckage an Kühl- und Schmiermittel, üblicherweise Kühl- und Schmierflüssigkeit, wird hier bewußt und mit gezielter Absicht in Kauf genommen. Der wesentliche Anteil des zugeführten Kühl- und Schmiermittels gelangt vom Ringkanal 13' in das hohle Innere 30 der Spindel 3 und von dort in einen Axialkanal im Inneren des nicht dargestellten Werkzeugs, um dessen Arbeitsbereich zu kühlen, zu schmieren und zu spülen.

Im Einsatz rotiert die Werkzeugaufnahmespindel 3 zusammen mit dem Werkzeug und der Spannmutter 2 um ihre Längsmittelachse 32, während der Ringkörper 10 und der Werkzeugkopf 4 nicht rotieren. Zur Aufnahme des durch Reibung erzeugten Drehmoments genügt in der Regel eine als Rohrleitung ausgeführte Kühl- und Schmiermittelzuleitung, die mit dem Zufuhrkanal 14 verbunden ist. Bedarfsweise kann eine separate Drehmomentstütze vorgesehen sein, die den Ringkörper 10 mit einem nicht rotierenden Teil der zugehörigen Maschine, z.B. mit dem Werkzeugkopf 4, verbindet.

Die bewußt hervorgerufene geringe Leckageströmung an Kühl- und Schmiermittel sorgt für eine ausreichende Schmierung der Gleitlager 15, 16 zwischen Spannmutter 2 und Ringkörper 10.

Wie die Figur 1 weiter zeigt, ist im vorliegenden Ausführungsbeispiel der Einrichtung 1 der Ringkörper 10 in einer radialen Ebene in zwei Ring-Teilkörper 11, 12 geteilt. Der axial innere, also dem Werkzeugkopf 4 zugewandte Ring-Teilkörper 12 besitzt dabei den Zufuhrkanal 14. Verbunden sind die beiden Ring-Teilkörper 11, 12 mittels mehrerer parallel zur Axialrichtung verlaufender Verbindungsschrauben 17, wobei in der Zeichnung nur die Lage einer dieser Schrauben durch eine strichpunktierte Linie angedeutet ist. Bei Bedarf kann so der axial äußere Ring-Teilkörper 11 durch Herausdrehen der Schrauben 17 von dem anderen Ring-Teilkörper 12 getrennt und in Axialrichtung abgezogen werden. Auf diese Weise wird die Spannmutter 2 für eine Betätigung zugänglich, was beispielsweise bei einem Werkzeugwechsel erforderlich wird. Die Spannmutter 2 ist dazu, wie üblich, mittels eines Innengewindes 23 mit einem passenden Außengewinde 33 am axial äußeren Stirnende der Werkzeugaufnahmespindel 3 verschraubt.

In dem übrigen dargestellten Aufbau entsprechen Werkzeugaufnahmespindel 3 und Werkzeugkopf 4 gängigen Konstruktionen. Wie üblich, ist die Werkzeugaufnahmespindel 3 mittels zweier axial beabstandeter Wälzlager 41, 41' drehbar sowie gegen axiale Verschiebung gesichert im hohlen Inneren 40 des Werkzeugkopfs 4 gelagert. Nach außen hin sind die Wälzlager 41, 41' durch je einen elastischen Dichtring 42, 42' abgedichtet.

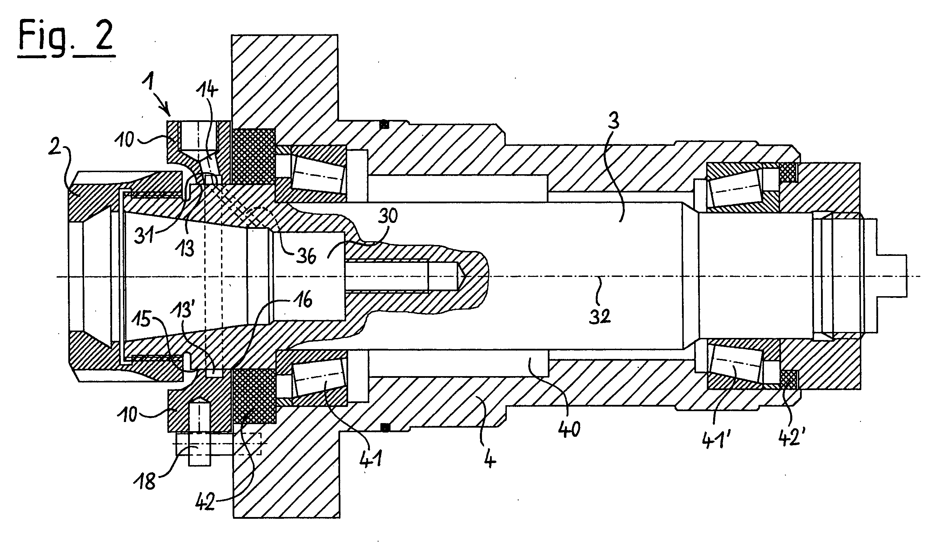

Figur 2 der Zeichnung zeigt eine zweite Ausführung der Einrichtung 1, wobei hier die Einrichtung 1 ebenfalls als Ringkörper 10, nun aber in einteiliger Ausführung, gestaltet ist. Im Unterschied zur Ausführung gemäß Figur 1 ist in Figur 2 der Ringkörper 10 auf dem axial äußeren, außerhalb des Werkzeugkopfs 4 liegenden Endbereich der Werkzeugaufnahmespindel 3 auf deren Außenumfang 31 aufgesetzt. Auch hier bildet der Ringkörper 10 an seinem Innenumfang 13 mit dem Außenumfang 31 der Werkzeugaufnahmespindel 3 zwei axial voneinander beabstandete Gleitlager 15, 16, die allein durch je eine Spalt- oder Labyrinthdichtung ausreichend abgedichtet sind. Auch hier ist eine gewisse Leckage an Kühl- und Schmierflüssigkeit durch die Gleitlager 15, 16 für deren Schmierung beabsichtigt. Am Innenumfang 13 des Ringkörpers 10 ist wieder der Ringkanal 13' vorgesehen, von dem aus eine hier verdeckt liegende, schräg verlaufende Bohrung 36 durch die Werkzeugaufnahmespindel 3 in deren hohles Innere 30 führt. Die über den Zufuhrkanal 14 zugeführte Kühl- und Schmierflüssigkeit gelangt also auf diesem Wege in den Axialkanal des auch hier nicht eigens dargestellten Werkzeuges und durch dessen Axialkanal in den Werkzeug-Arbeitsbereich.

In ihren übrigen Teilen entsprechen die Werkzeugaufnahmespindel 3 und der Werkzeugkopf 4 in Figur 2 der Ausführung gemäß Figur 1. Die Spannmutter 2 ist bei dem Ausführungsbeispiel gemäß Figur 2 von üblicher Ausführung und, wie zuvor beschrieben, mit dem axial äußeren Ende der Werkzeugaufnahmespindel 3 verschraubt. An der Zuführung der Kühl- und Schmierflüssigkeit ist hier die Spannmutter 2 nicht beteiligt, so daß sie jederzeit frei und unbehindert zugänglich ist, was insbesondere bei häufigem Werkzeugwechsel vorteilhaft ist.

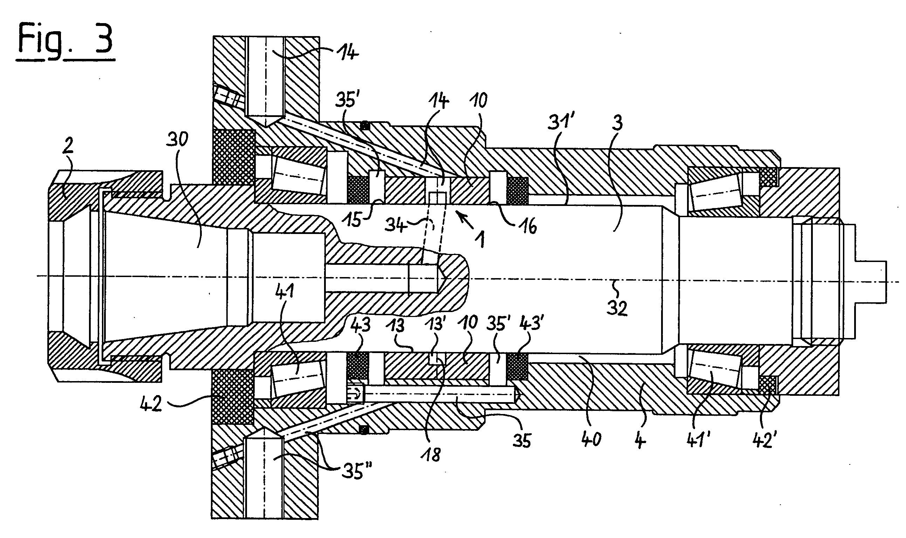

Figur 3 der Zeichnung schließlich zeigt ein drittes Ausführungsbeispiel der Einrichtung 1, wobei diese hier in das Innere des Werkzeugkopfs 4 integriert ist, so daß sie nach außen hin praktisch nicht in Erscheinung tritt. Die Werkzeugaufnahmespindel 3 ist auch hier wieder, wie schon zuvor erläutert, im hohlen Inneren 40 des Werkzeugkopfs 4 drehbar gelagert. Auf das axial äußere Ende der Werkzeugaufnahmespindel 3 ist die Spannmutter 2 aufgeschraubt. In das hohle Innere 30 der Werkzeugaufnahmespindel 3 ist ein auch hier nicht dargestelltes Werkzeug einsetzbar und mittels der Spannmutter 2 arretierbar.

Wie schon bei den Ausführungen gemäß Figur 1 und 2 ist auch hier die Einrichtung 1 im wesentlichen durch einen Ringkörper 10 gebildet, der hier wieder einteilig ausgeführt ist. Der Ringkörper 10 umgibt den im Inneren 40 des Werkzeugkopfs 4 liegenden Bereich 31' des Außenumfangs der Werkzeugaufnahmespindel 3 und bildet mit dieser zwei axial beabstandete Gleitlager 15, 16, die allein durch eine Spalt- oder Labyrinthdichtung abgedichtet sind. Die Zufuhr der Kühl- und Schmierflüssigkeit erfolgt hier wieder durch einen Zufuhrkanal 14, der gemäß Figur 3 zunächst in Radialrichtung von oben her und dann schräg nach rechts und unten durch den Werkzeugkopf 4 verläuft und dann in den Zufuhrkanal 14 des Ringkörpers 10 einmündet. Der Ringkörper 10 besitzt auch hier wieder an seinem Innenumfang 13 den Ringkanal 13', der mit dem Zufuhrkanal 14 in Strömungsverbindung steht. Durch die Werkzeugaufnahmespindel 3 verläuft ein hier verdeckt liegender, annähernd radial gerichteter Kanal 34 in das hohle Innere 30 der Werkzeugaufnahmespindel 3, um das darin gehalterte Werkzeug mit dem Kühl- und Schmiermittel zu versorgen.

Die Leckageanteile des Kühl- und Schmiermittels, die durch die Gleitlager 15, 16 in Axialrichtung aus dem Ringkanal 13' austreten, werden in zwei ringförmigen Sammelräumen 35', die durch einen Sammelkanal 35 verbunden sind, gesammelt. Der Sammelkanal 35 ist mit einem drucklosen Ableitungskanal 35'' verbunden, der zunächst schräg nach links unten und dann in Radialrichtung nach außen durch den Werkzeugkopf 4 verläuft. Damit die drucklose Leckageflüssigkeit nicht in den Bereich der Wälzlager 41, 41' gelangen kann, sind zwischen dem Außenumfang 31' der Werkzeugaufnahmespindel 3 und dem Innenumfang des Werkzeugkopfs 4 zwei Dichtringe 43, 43' angeordnet, die in Axialrichtung von den Stirnenden des Ringkörpers 10 beabstandet sind und die in Axialrichtung gesehen nach außen die beiden ringförmigen Sammelräume 35' begrenzen. Da die Leckageflüssigkeit im Bereich der ringförmigen Sammelräume 35' und in den nachfolgenden Kanalbereichen 35, 35'' drucklos ist, besteht keine Gefahr für ein Eindringen der Leckageflüssigkeit in die Wälzlager 41, 41'. Die ausreichende Dichtigkeit der Gleitlager 15, 16 wird auch hier durch ein entsprechend kleines Spaltmaß sowie durch eine große axiale Länge der Gleitlager 15, 16 erreicht, so daß die noch auftretende Leckagemenge im Verhältnis zur Menge der durchgesetzten Kühl- und Schmierflüssigkeit sehr gering ist. Separate Dichtringe oder sonstige weitere Dichtmittel im Bereich der Gleitlager 15, 16 werden auch hier nicht benötigt.

Die räumliche Orientierung des Werkzeugkopfs 4 mit der erfindungsgemäßen Einrichtung 1 spielt keine Rolle für die Funktion der Einrichtung 1, so daß die Einrichtung 1 praktisch an jeder beliebigen Werkzeug- oder sonstigen Bearbeitungsmaschine verwendbar ist, unabhängig davon, in welche Richtung Werkzeugkopf 4 und Werkzeug bei ihrem Einsatz weisen.

## Patentansprüche

1. Einrichtung (1) für die Zuführung von Kühl- und Schmiermittel zu einem rotierenden Werkzeug mit innerer Kühl- und Schmiermittelzufuhr, wobei das Werkzeug bei seinem Einsatz mittels eines Spannmittels (2) an einer Werkzeugaufnahmespindel (3) gehaltert ist, die drehantreibbar in einem nichtrotierenden Werkzeugkopf (4), der Teil einer Werkzeugmaschine ist, gelagert ist, wobei die Einrichtung (1) durch einen nichtrotierenden Ringkörper (10) gebildet ist, der einen spindelnahen Abschnitt des Werkzeugs oder eine Spannmutter (2) oder einen Abschnitt der Werkzeugaufnahmespindel (3) konzentrisch umgibt, wobei der Ringkörper (10) mindestens einen von außen zu einem Ringkanal (13') an seinem Innenumfang (13) führenden Zufuhrkanal (14) für das Kühl- und Schmiermittel aufweist und wobei vom Ringkanal (13') eine Strömungsverbindung in das Innere des Werkzeugs führt,
**dadurch gekennzeichnet,**
- **daß** der Ringkörper (10) in Axialrichtung gesehen beiderseits des Ringkanals (13') mit dem Werkzeug oder der Spannmutter (2) oder der Werkzeugaufnahmespindel (3) mindestens je ein Gleitlager (15, 16) mit je einer dichtring- und dichtstofflosen, förderrillenfreien Spaltdichtung bildet,
- **daß** das Kühl- und Schmiermittel bei seiner Einleitung in den Ringkörper (10) unter einem Druck von mindestens 80 bar steht und
- **daß** das Verhältnis zwischen einem Dichtspaltmaß des Gleitlagers (15, 16) und einer Dichtspaltlänge des Gleitlagers (15, 16) so gewählt ist, daß bei dem vorgegebenen Druck des Kühl- und Schmiermittels zum einen durch den Strömungswiderstand des Dichtspalts eine ausreichende Abdichtung und gleichzeitig zum anderen durch eine begrenzte Leckage des Dichtspalts eine ausreichende Schmierung der relativ zueinander rotierenden Teile des Gleitlagers (15, 16) gewährleistet ist.

2. Einrichtung nach Anspruch 1, **dadurch gekennzeichnet, daß** die Spaltdichtung als Labyrinthdichtung ausgebildet ist.

3. Einrichtung nach Anspruch 1 oder 2, **dadurch gekennzeichnet, daß** außenseitig an den Ringkörper (10) mindestens eine Kühl- und Schmiermittel-Zuleitung in Strömungsverbindung mit dem Zufuhrkanal (14) anschließbar ist.

4. Einrichtung nach Anspruch 3, **dadurch gekennzeichnet, daß** die Kühl- und Schmiermittel-Zuleitung als maschinenseitig festgelegte Rohrleitung ausgeführt ist, die eine Drehmomentstütze für den nichtrotierenden Ringkörper (10) bei Rotation des Werkzeugs, der Spannmutter (2) und der Werkzeugaufnahmespindel (3) bildet.

5. Einrichtung nach einem der vorhergehenden Ansprüche, **dadurch gekennzeichnet, daß** der Ringkörper (10) in einer Radialebene in zwei Teilkörper (11, 12) geteilt ist, die miteinander dichtend und lösbar verbunden sind.

6. Einrichtung nach Anspruch 3 und 5 oder nach Anspruch 4 und 5, **dadurch gekennzeichnet, daß** die Kühl- und Schmiermittel-Zuleitung an denjenigen Teilkörper (12) des Ringkörpers (10) anschließbar ist, der von einem Arbeitsende des Werkzeugs weiter entfernt liegt.

7. Einrichtung nach einem der vorhergehenden Ansprüche, wobei der Ringkörper (10) die Spannmutter (2) umgibt, **dadurch gekennzeichnet, daß** der Ringkörper (10) mindestens einen Riegel aufweist, der bei stillstehender Spannmutter (2) mit dieser in einen eine relative Verdrehung unterbindenden Eingriff bringbar ist.

8. Einrichtung nach einem der vorhergehenden Ansprüche, **dadurch gekennzeichnet, daß** der Ringkörper (10) an seiner Außenseite mindestens ein Eingriffselement zum bedarfsweisen Ansetzen einer Drehmomentstütze (18) aufweist.

9. Einrichtung nach einem der Ansprüche 1 bis 6, **dadurch gekennzeichnet, daß** der Ringkörper (10) als integraler Teil des Werkzeugkopfs (4) ausgebildet und/oder in diesem untergebracht ist und dort die Werkzeugaufnahmespindel (3) umgibt und daß der Werkzeugkopf (4) mit einem drucklosen, gegen im Werkzeugkopf (4) angeordnete Lager (41, 41') abgedichteten Ableitungskanal (35, 35') für Leckageanteile des Kühl- und Schmiermittels ausgebildet ist.

10. Einrichtung nach einem der vorhergehenden Ansprüche, **dadurch gekennzeichnet, daß** der Ringkörper (10) und die weiteren von dem unter Druck stehenden Kühl- und Schmiermittel durchströmten Teile der Werkzeugmaschine für einen Kühl- und Schmiermittel-Druck von bis zu etwa 200 bar ausgelegt sind.
